## Europäisches Patentamt
## European Patent Office
## Office européen des brevets

(19)

(11) Veröffentlichungsnummer: **0 114 176**
**B1**

(12)

# ·EUROPÄISCHE PATENTSCHRIFT

(45) Veröffentlichungstag der Patentschrift :
25.03.87

(51) Int. Cl.⁴ : **A 22 C   7/00**

(21) Anmeldenummer : 83105018.2

(22) Anmeldetag : 20.05.83

(54) Lebensmittelbehälter zum Aufbewahren und bedarfsweisen Entnehmen von Fleisch sowie damit durchführbares Verfahren.

(30) Priorität : 23.12.82 DE 8236195 U

(43) Veröffentlichungstag der Anmeldung :
01.08.84 Patentblatt 84/31

(45) Bekanntmachung des Hinweises auf die Patenterteilung : 25.03.87 Patentblatt 87/13

(84) Benannte Vertragsstaaten :
AT BE CH DE FR GB IT LI LU NL SE

(56) Entgegenhaltungen :
EP-A- 0 057 478
CH-A-   100 928
CH-A-   276 706
DE-A- 2 256 078
DE-B- 1 251 672
FR-A- 2 336 085
GB-A-   296 549
US-A- 1 577 851
US-A- 1 988 558
US-A- 2 244 540
US-A- 3 098 747
US-A- 3 609 799

(73) Patentinhaber : VESTEN AG
Dorfplatz 9
CH-6370 Stans (CH)

(72) Erfinder : Schlegel, Jürgen
Hauptstrasse 9
D-7801 Umkirch (DE)

(74) Vertreter : Patentanwälte Dr. Soif & Zapf
Schlossbleiche 20 Postfach 13 01 13
D-5600 Wuppertal 1 (DE)

## Beschreibung

Die Erfindung betrifft einen Lebensmittelbehälter zum Aufbewahren und bedarfsweisen Entnehmen von unter Druck gelagertem Fleisch, mit einem obenseitigen Abdeckorgan, und einem mit dem Behälter kuppelbaren Halter für das Abdeckorgan sowie für eine innerhalb des Behälters höhenverstellbare Druckbeaufschlagungsvorrichtung für das Fleisch.

Zum Aufbewahren von Fleisch ist es durch die DE-PS-3 106 265 bekannt, dieses unter Druck in einem Behälter zu lagern. Zur Druckbeaufschlagung werden die Behälter aufeinandergesetzt, wobei eine Randprofilierung od. dgl. für eine sichere Verbindung sorgt sowie auch eine in Höhenrichtung wirksame Einsetzbegrenzung bildet. Da die Druckbeaufschlagung des Fleisches nur bei einer ganz bestimmten Füllhöhe gegeben ist, ist es erforderlich, nach der Entnahme eines oder mehrerer Fleischstücke, den Behälter nachzufüllen. Dies ist in der Praxis jedoch nicht gut möglich, da eine kontrollierte Lagerzeit des Gesamtfleischvorrates dann nicht mehr möglich ist. Daher eignet sich das Einlagern von Fleisch in den vorgenannten Behältern vor allem für Großbetriebe, wo jeweils ein Behälterinhalt auf einmal verwendet werden kann. Kleinere Behälter würden den gegenüber Vacuumverpackungen neben der längeren Haltbarkeit erzielten Vorteil des geringeren, insbesondere materiellen Aufwandes nur noch in einem verminderten Maß ergeben.

Aufgabe der vorliegenden Erfindung ist es, einen Lebensmittelbehälter zu schaffen, der auch bei einer größeren Menge von darin unter Druck gelagertem Fleisch ein portionsweises, mengenmäßig unterschiedliches Entnehmen von Fleischstücken unter Beibehaltung der durch die Druckbeaufschlagung erzielten Vorteile ermöglicht.

Zur Lösung dieser Aufgabe wird erfindungsgemäß vorgeschlagen, daß die Druckbeaufschlagungsvorrichtung in Form eines Druckstempels aus einer an dem Halter geführten Führungsstange sowie einem am unteren Ende befindlichen Niederhalter besteht und ein oder gegebenenfalls mehrere Widerlager zum Angreifen für eine Hubeinrichtung aufweist.

Mittels einer solchen Druckbeaufschlagungsvorrichtung ist bei sich ändernder Füllhöhe durch Entnehmen von Fleischstücken, ein Nachstellen und kontrolliertes Druckbeaufschlagen in einem vorgesehenen Maße möglich. Somit kann von einem größeren Frischfleischvorrat, der etwa dem über die mögliche Lagerzeit vorgesehenen Fleischverbrauch entsprechen kann, laufend Fleisch in beliebigen Portionsmengen entnommen werden, ohne daß das restliche Fleisch hinsichtlich der Lagerqualität nachteilig beeinflußt wird.

Es ist zwar aus der DE-B-1 251 672 schon ein Preßkasten bekannt, der eine darin höhenverstellbare Druckbeaufschlagungsvorrichtung aufweist. Dieser Preßkasten ist jedoch nicht zum erfindungsgemäßen Aufbewahren und portionsweisen Entnehmen von Frischfleisch geeignet, sondern dient zur Herstellung insbesondere von Kantwurst und dgl., Bündnerfleisch usw. Insbesondere ist damit keine Verstellen eines Niederhalters in Anpassung an unterschiedliche Füllhöhen bis zur vollständigen Entleerung des Behälters möglich.

Nach einer Weiterbildung der Erfindung weist die Hubeinrichtung ein am Halterahmen lösbar anschließbares Anschlußteil, einen an einem Widerlager des Druckstempels ansetzbaren Fuß sowie eine mit dem Fuß fest verbundene und an dem Anschlußteil höhenveränderbar angreifende bzw. geführte Hubstange auf. Die Hubeinrichtung läß sich dadurch nach einer Fleischentnahme aus dem Behälter zum Nachstellen der Druckbeaufschlagungsvorrichtung an dieser ansetzen, kann danach aber abgenommen und auch bei anderen Behältern verwendet werden.

Eine weitere Ausgestaltung der Erfindung sieht vor, daß der Behälter mit einer Kühlung versehen ist. Man ist dadurch unabhängig von Kühlräumen und kann den Lebensmittelbehälter dadurch auch unmittelbar in dem Bereich aufstellen, wo das Fleisch Stück für Stück gebraucht wird, insbesondere bei einer Verkaufstheke.

Die Erfindung betrifft auch ein Verfahren zum Aufbewahren und bedarfsweisen Entnehmen von Fleisch. Das erfindungsgemäße Verfahren ist dadurch gekennzeichnet, daß das Fleisch in einen bis auf eine obere Einfüllöffnung im wesentlichen geschlossenen Behälter eingelegt und von der Oberseite her druckbeaufschlagt wird derart, daß dabei austretender Fleischsaft die oberste Fleischschicht abdeckt. Versuche haben gezeigt, daß bei einer solchen dosierten Druckbeaufschlagung, wobei das richtige Maß dieser Druckbeaufschlagung auch durch die Menge des austretenden Fleischsaftes kontrollierbar ist, eine besonders gute Haltbarkeit des Fleisches auch über längere Lagerzeiträume gegeben ist.

Zusätzliche Ausgestaltungen der Erfindung sind in den weiteren Unteransprüchen aufgeführt. Nachstehend ist die Erfindung mit ihren wesentlichen Einzelheiten anhand der Zeichnung noch näher erläutert.

Es zeigt:

Figur 1 eine etwas schematisierte Seitenansicht eines Behälters mit Halter und Druckbeaufschlagungsvorrichtung,

Figur 2 eine perspektivische Seitenansicht eines Abdeckorgans zum Druckbeaufschlagen und

Figur 3 eine abgewandelte Ausführungsform eines zum Teil aufgebrochen bzw. im Schnitt dargestellten Lebensmittelbehälters.

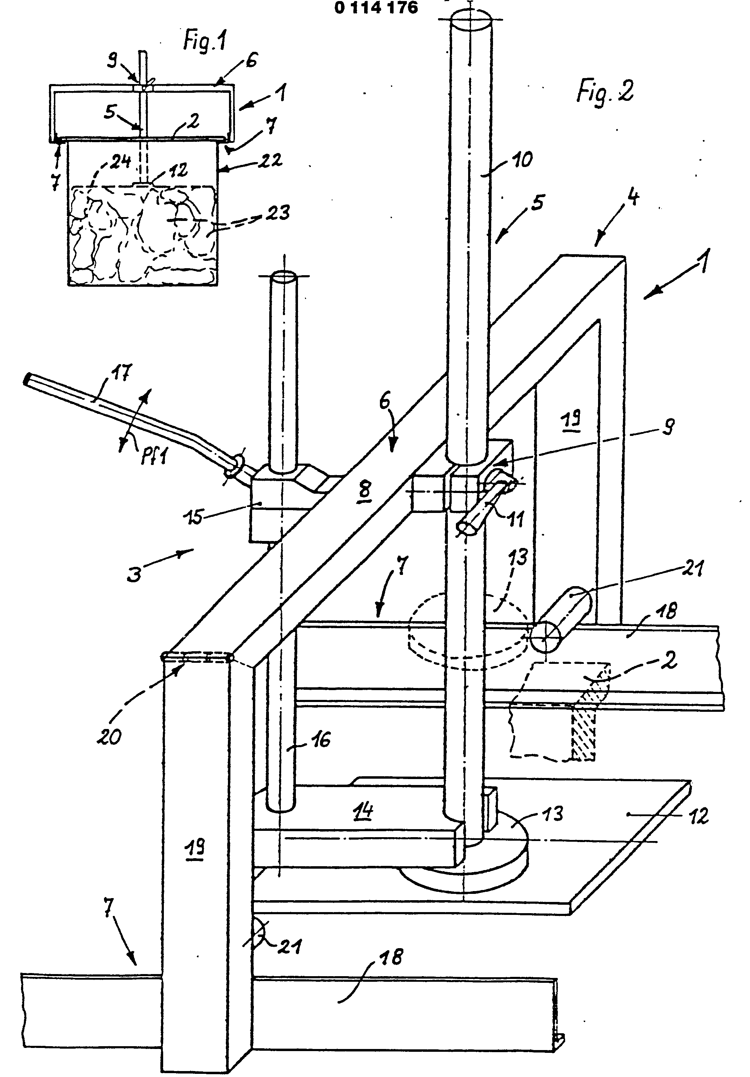

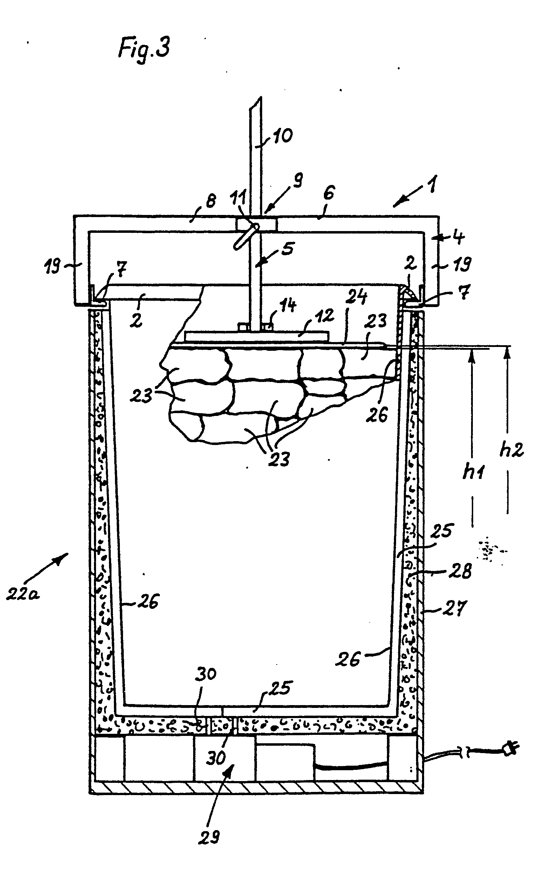

Eine im ganzen mit 1 bezeichnete Vorrichtung dient zum Druckbeaufschlagen von in einem Behälter 22 befindlichem Frischfleisch 23 (Fig. 1, 3). Von einem solchen Behälter ist in Fig. 2 strichliniert nur ein Teil seines oberen Randes 2 angedeutet.

Die Vorrichtung 1 besteht im wesentlichen aus einer Hubeinrichtung 2 sowie einer Druckbeaufschlagungsvorrichtung im wesentlichen mit dem Halter 4 und dem Druckstempel 5. Die Hubeinrichtung 3 ist von der übrigen Vorrichtung trennbar bzw. auch leicht an diese ankuppelbar. Die Hubeinrichtung 3 kann somit für mehrere Vorrichtungen verwendet werden, so daß der Aufwand dadurch insgesamt reduziert ist. In Fig. 1 ist diese Hubeinrichtung 3 nach dem Niederdrücken des Druckstempels 5 bereits entfernt. Der Halter 4 ist im wesentlichen als etwa U-förmiger Rahmen 6 ausgebildet, der an seinen freien Endbereichen Greifer 7 zum Erfassen bzw. Übergreifen etwa gegenüberliegender Behälterränder 2 aufweist. Etwa im Mittelbereich seines U-Quersteges 8 ist eine Führung 9 für die Führungsstange 10 des Druckstempels 5 angeordnet. Diese Führung 9 bildet gleichzeitig eine Klemmvorrichtung und weist zum Festlegen der Führungsstange 10 in unterschiedlichen Höhen einen veränderbaren Durchtrittsquerschnitt sowie eine Klemmschraube 11 auf.

Am unteren Ende ist an der Führungsstange 10 des Druckstempels 5 eine Druckplatte 12 vorgesehen, an deren Oberseite sich ein Widerlager 13 zum Angreifen der Hubeinrichtung 3 befindet. Strichliniert ist angedeutet, daß auch mit Abstand zur Druckplatte 12 noch ein oder mehrere dieser Widerlager 13 vorgesehen sein können. Dies kann zweckmäßig sein, wenn die Gesamthubhöhe des Druckstempels 5 größer ist als die maximale Hubhöhe der Hubeinrichtung 3. In der Praxis wird die den Deckel 24 (Fig. 1 u. 3) beaufschlagende Druckplatte 12 meist nur so weit nach unten verfahren, daß sie nicht oder nur wenig in den Fleischsaft od. dgl. eingetaucht. Andererseits ist bei der Druckplatte 12 wegen ihrer Formgebung ein einfaches Sauberhalten und Reinigen möglich.

Die Hubeinrichtung 3 kann durch einen Wagenheber gebildet sein, der einen am Halterahmen, insbesondere an dessen U-Quersteg 8 anschließbaren Anschlußteil 15 sowie den an einem Widerlager 13 des Druckstempels 5 ansetzbaren Fuß 14 aufweist. Beim Anschlußteil 15 ist höhenveränderbar eine Hubstange 16 geführt, die fest mit dem Fuß 14 verbunden ist. Beim Betätigen des Hubhebels 17 gemäß dem Doppelpfeil Pf 1 wird die Hubstange 16 mit dem am unteren Ende befestigten Fuß 14 relativ zum Rahmen 6 nach unten verschoben und beaufschlagt mit dem Fuß 14 ein Widerlager 13 des Druckstempels 5. Ist dieser Druckstempel 5 weit genug nach unten Verfahren, so wird die Klemmschraube 11 angezogen, so daß der Druckstempel in dieser Lage fixiert ist. Die Hubeinrichtung 3 kann dann abgenommen und für eine andere Druckbeaufschlagungs-Vorrichtung verwendet werden. Die Greifer 7 zum Untergreifen des Behälterrandes 2 sind im Ausführungsbeispiel im wesentlichen durch Winkelschienen 18 gebildet, die in ihrer Form und ihren Abmessungen an den Behälterquerschnitt und auch gegebenenfalls an die Randumfangsform angepaßt sind. Diese Winkelschienen 18 oder dgl. Greifer können auch relativ zueinander verstellbar angeordnet sein, beispielsweise indem zumindest einer der U-Schenkel 19 über ein Scharnier 20 mit dem U-Quersteg 8 verbunden ist. An den U-Schenkeln 19 sind etwas oberhalb eines zu erfassenden Behälter-Randes 2 noch Führungsrollen 21 erkennbar, die nach dem Ansetzen der Vorrichtung 1 an einem Behälterrand ein Abrutschen nach unten von dieser bei noch nicht angesetzter Hubeinrichtung 3 bzw. nicht angezogener Klemmschraube 11 verhindern.

Insgesamt ergibt sich durch die höhenverstellbare Druckbeaufschlagungsvorrichtung in vorteilhafter Weise die Möglichkeit, auch bei unterschiedlichen Füllhöhen eine kontrollierbare Druckbeaufschlagung zu erzielen. Das richtige Maß dieser Druckbeaufschlagung ist sowohl für die Haltbarkeit als auch für die Qualität des Fleisches von wesentlicher Bedeutung. Eine zu große Druckbeaufschlagung würde zu viel Fleischsaft aus dem Fleisch herausdrücken, so daß dadurch neben einer Qualitätseinbuße auch ein Gewichtsverlust vorhanden wäre. Andererseits ist es aber für das erfindungsgemäße Einlagern von ausgebeintem Frischfleisch in dem Behälter 22 erforderlich, die einzelnen Fleischstücke 23 zwischenraumfrei zu lagern. Dies wird bereits durch entsprechendes Einlegen des Fleisches in den Behälter 22 erreicht. Gegebenenfalls noch vorhandene Restzwischenräume werden dann durch die Druckbeaufschlagung des Fleisches teils bereits durch das Eigengewicht von diesem, zum anderen aber, insbesondere in den oberen Schichten durch die Druckbeaufschlagungsvorrichtung beseitigt. Durch diese Lagerung der Fleischstücke dicht an dicht praktisch ohne Zwischenraum bildet der gesamte, im Behälter 22 befindliche Fleischvorrat praktisch ein einziges Fleischstück, dessen Außenseiten einerseits durch die Behälterwandung und andererseits durch einen oberseitigen Saftabschluß geschützt sind. Die einzelnen Fleischstücke liegen somit nicht im eigenen Saft, sondern sind durch den Preßdruck eigentlich an ihen Außenseiten saftfrei bis trocken gehalten. Dadurch ergibt sich eine längere Haltbarkeit und der weitere Vorteil, daß eine Einzelstückentnahme ohne weiteres möglich ist und der Rest dann wieder wie ein Gesamtstück weiter gelagert werden kann. Außerdem ist dadurch eine kompakte Aufbewahrung auf geringstem Raum mit merkbar geringeren Lagerkosten möglich.

Die zuunterst gelagerten Fleischstücke weisen bei dieser Lagerung die längste Haltbarkeit auf, so daß auch eine Anpassung der jeweils möglichen Lagerzeit an die Entnahme des Fleisches gegeben ist.

Fig. 3 zeigt noch eine abgewandelte Ausführungsform eines Lebensmittelbehälters 22a, der mit einer Kühlung versehen ist. Dadurch besteht die Möglichkeit, diesen direkt im Verkaufsraum od. dgl. aufzustellen und damit u. a. auch den Zugriff zu verbessern. Andererseits ist bei Verwendung eines solchen Kühl-Behälters 22a kein Kühlraum mehr erforderlich.

Der Behälter 22a ist außenseitig mit einer Kühlmittelführung 25, z. B. einer Kühlschlange od. dgl. versehen, innerhalb der eine Kühlflüssigkeit umgefördert wird.

Zweckmäßigerweise besteht die Behälterinnenwand 26 aus Edelstahl, gegebenenfalls aus Kunststoff und die Behälteraußenwand 27 besteht in der Regel aus Kunststoff, vorzugsweise mit einer thermischen Isolierung 28. Diese Isolierung 28 ist, wie in Fig. 3 erkennbar, zwischen der Außenseite der Kühlmittelführung 25 und der Behälteraußenwand 27 eingefügt. Dadurch ergibt sich eine gute Kühlübertragung von dem Kühlmittel zum Behälterinneren hin, während durch die Isolierung 28 und die Kunststoffbehälteraußenwand 27 eine entsprechende Abschirmung nach außen hin gegeben ist. Bodenseitig erkennt man bei diesem Behälter 22a noch ein Kälteaggregat 29, das über Leitungen 30 mit der Kühlmittelführung 25 in Verbindung steht. Das Kälteaggregat 29 könnte auch an anderer Stelle, z. B. auch rückseitig am Behälter 22a angeordnet sein.

Bei dem Behälter 22 a ist auch gut erkennbar, daß der eigentliche Innenbehälter zur Aufnahme des Fleisches eine sich nach unten konisch verjüngende Form hat. Dadurch erfolgt auch bereits beim Einlegen des Fleisches eine Seitendruckbeaufschlagung und ein zwischenraumfreies Aneinanderliegen der einzelnen Fleischstücke. Erwähnt sei noch, daß die Behälter vorzugsweise eine rechteckige Querschnittsform haben mit Kantenmaßen von beispielsweise 57 cm Breite und 93 cm Tiefe. Die Höhe kann dabei etwa 83 cm betragen. Gegebenenfalls können auch Behälter mit einem halbierten Kantenmaß und im übrigen belassenen Maßen vorgesehen sein, so daß dann auch mehrere Behälter unterschiedlicher Aufnahmevolumen platzgünstig aneinandergestellt werden können. In Fig. 3 sind zur Verdeutlichung noch die Höhen h 1 und h 2 eingezeichnet, wobei h 1 die Höhe der Oberseite des Fleischvorrates und h 2 die Höhe des gerade die Oberseite des Fleisches bedeckenden Fleischsaftes wiedergibt, der praktisch die Oberseite des Deckels 24 nicht übersteigt. Es hat sich überraschend herausgestellt, daß bei Frischfleisch nicht nur eine längere Haltbarkeit sondern auch schneller der gewünschte Reifegrad erreicht werden kann.

Neben der eckigen Querschnittsform, die insbesondere ein platzgünstiges Aufstellen mehrerer Behälter nebeneinander erlaubt, können auch runde bzw. gerundete Behälter vorgesehen sein. Die Behälter sind vorzugsweise für Füllmengen von 80 kg, 150 kg und 300 kg bemessen.

Versuche haben gezeigt, daß die Lagerzeiten für ausgebeintes Frischfleisch gegenüber herkömmlichen Lagermethoden (Vacuumbeutel, Abhängen im Kühlhaus) um etwa das dreifache verlängert werden können, wobei Schweinefleisch nach drei Wochen, Kalbfleisch nach vier Wochen und Rindfleisch nach sechs Wochen noch eine völlig einwandfreie Beschaffenheit, ohne erkennbar Qualitätsverluste aufwies. Auch hat es sich gezeigt, daß Fleisch mit hohem PH-Wert, sogenanntes DFD-Fleisch, nach dem erfindungsgemäßen Verfahren wesentlich länger als im Vacuumbeutel gelagert werden kann. Beim Einschichten zusammen mit anderem Fleisch ergab sich sogar in gewissem Maße eine Regenerierung dieses DFD-Fleisches.

Zusammengefaßt ergeben sich durch die erfindungsgemäßen Maßnahmen beim Lagern von Frischfleisch in Behältern unter Druckbeaufschlagung, wobei die Fleischstücke dicht an dicht liegen, folgende Vorteile :

Wesentliche verlängerte Lagerzeit, weniger Gewichtsverlust, bessere Fleischfarbe auch nach längerer Lagerzeit, keine sauren Geschmacksveränderungen, schnelleres Erreichen des gewünschten Reifegrades, verlustarmes und sicheres Reifen des Fleisches.

**Patentansprüche**

1. Lebensmittelbehälter zum Aufbewahren und bedarfsweisen Entnehmen von unter Druck gelagertem Fleisch (23), mit einem obenseitigen Abdeckorgan (24) und einem mit dem Behälter (22, 22a) kuppelbaren Halter (4) für das Abdeckorgan sowie für eine innerhalb des Behälters höhenverstellbare Druckbeaufschlagungsvorrichtung (1) für das Fleisch, dadurch gekennzeichnet, daß die Druckbeaufschlagungsvorrichtung in Form eines Druckstempels (5) aus einer an dem Halter (4) geführten Führungsstange (10) sowie einem am unteren Ende befindlichen Niederhalter (12) besteht und ein oder gegebenenfalls mehrere Widerlager (13) zum Angreifen für eine Hubeinrichtung (3) aufweist.

2. Behälter nach Anspruch 1, dadurch gekennzeichnet, daß die Hubeinrichtung (3) ein am Halterahmen (6) lösbar anschließbares Anschlußteil (15), einen an einem Widerlager (13) des Druckstempels (5) ansetzbaren Fuß (14) sowie eine mit dem Fuß fest verbundene und an dem Anschlußteil (15) höhenveränderbar angreifende bzw. geführte Hubstange (16) aufweist.

3. Behälter nach Anspruch 1 oder 2, dadurch gekennzeichnet, daß die Hubeinrichtung (3) durch einen zweckmäßigerweise angepaßten Wagenheber od. dgl. gebildet ist.

4. Behälter nach einem der Ansprüche 1 bis 3, dadurch gekennzeichnet, daß der im wesentlichen als etwa U-förmiger Rahmen (6) ausgebildete Halter (4) an seinen freien Endbereichen Greifer (7) zum Untergreifen der Behälterränder (2) aufweist, die im wesentlichen durch Winkelschienen (18) gebildet sind, daß gegebenenfalls jeweils Führungsrollen (21) insbesondere an den U-Schenkeln (19) des halterahmens mit Höhenabstand zur Auflageseite der Greifer für den Behälterrand (2) vorgesehen sind und daß die Greifer (7) vorzugsweise etwa der Form des Behälter-Querschnittes und gegebenenfalls der Randumfangsform angepaßt sind.

5. Behälter nach einem der Ansprüche 1 bis 4, dadurch gekennzeichnet, daß zumindest ein U-Schenkel (19) od. dgl. des Halters (4) über ein Scharnier (20) mit etwa randparalleler bzw. tangentialer Achse bezüglich des Behälterrandes mit dem U-Quersteg (8) od. dgl. verbunden ist.

6. Behälter nach einem der Ansprüche 1 bis 5, dadurch gekennzeichnet, daß zumindest seine mit dem Fleisch (23) in Verbindung kommenden Teile aus lebensmittelgerechtem Werkstoff, vorzugsweise aus Edelstahl, gegebenenfalls aus insbesondere glasfaserverstärktem Kunststoff bestehen.

7. Behälter nach einem der Ansprüche 1 bis 6, dadurch gekennzeichnet, daß der Behälter (22a) mit einer Kühlung versehen ist.

8. Behälter nach Anspruch 7, dadurch gekennzeichnet, daß der Behälter (22a) bei bzw. in seiner Wandung eine Kühlschlange od. dgl. Kühlmittel aufweist.

9. Behälter nach Anspruch 7 oder 8, dadurch gekennzeichnet, daß die Behälterinnenwand (26) aus Edelstahl, gegebenenfalls aus Kunststoff und die Behälteraußenwand (27) aus Kunststoff vorzugsweise mit einer thermischen Isolierung (28) bestehen und daß zwischen Innen- und Außenwand eine Führung (25) für Kühlflüssigkeit od. dgl. vorgesehen ist.

10. Behälter nach einem der Ansprüche 7 bis 9, dadurch gekennzeichnet, daß beim Behälter (22a) z. B. bodenseitig oder rückseitig ein Kalteaggregat (29) angeordnet ist.

11. Behälter nach einem der Ansprüche 1 bis 10, dadurch gekennzeichnet, daß er eine sich nach unten konisch verjüngende Form hat und z. B. Außenabmessungen von etwa 83 cm Höhe, 57 cm Breite und 93 cm bzw. 46 cm Tiefe hat.

12. Verfahren zum Aufbewahren und bedarfsweisen Entnehmen von Fleisch, insbesondere mittels eines Behälters nach Anspruch 1 bis 11, dadurch gekennzeichnet, daß das Fleisch (23) in einen bis auf eine obere Einfüllöffnung im wesentlichen geschlossenen Behälter (22, 22a) eingelegt und von der Oberseite her druckbeaufschlagt wird derart, daß dabei austretender Fleischsaft die oberste Fleischschicht abdeckt.

13. Verfahren nach Anspruch 12, dadurch gekennzeichnet, daß die Fleischstücke zwischenraumfrei eingelagert werden.

14. Verfahren nach Anspruch 12 oder 13, dadurch gekennzeichnet, daß beim Einlegen der Fleischstücke vorhandene Restzwischenräume durch Druckbeaufschlagung des Fleisches zumindest weitgehend beseitigt werden.

**Claims**

1. Food container for preserving meat (23) stored under pressure and for extracting it as required, with a cover member (24) located on top, and with a holder (4) couplable to the container (22, 22a) and intended for the cover member and for a meat pressing device (1) vertically adjustable within the container, characterized in that the pressing device in the form of a press ram (5) consists of a guide rod (10) guided on the holder (4) and of a holding-down member (12) located at the bottom end and has one or, if appropriate, more abutments (13) for the engagement of a lifting arrangement (3).

2. Container according to Claim 1, characterized in that the lifting arrangement (3) has a connection part (15) connectable releasably to the holding frame (6), a foot (14) attachable to an abutment (13) of the press ram (5) and a lifting rod (16) connected fixedly to the foot and engaging or guided on the connection part (15) so as to be vertically adjustable.

3. Container according to Claim 1 or 2, characterized in that the lifting arrangement (3) is formed by an appropriately adapted vehicle-lifting jack or the like.

4. Container according to one of Claims 1 to 3, characterized in that the holder (4) designed essentially as an approximately U-shaped frame (6) has, in its free end regions, grabs (7) intended for engaging under the container edges (2) and formed essentially by angle bars (18), in that, if appropriate, a guide roller (21) is provided especially on each of the U-legs (19) of the holding frame at a vertical distance from the bearing side of each of the grabs for the container edges (2), and in that the grabs (7) are preferably matched approximately to the form of the container cross-section and, if appropriate, to the form of the edge periphery.

5. Container according to one of Claims 1 to 4, characterized in that at least one U-leg (19) or the like of the holder (4) is connected to the U-crosspiece (8) or the like via a hinge (20) with an axis approximately parallel to the container edge or tangential relative to the container edge.

6. Container according to one of Claims 1 to 5, characterized in that at least its parts coming in contact with the meat (23) consist of food-compatible material, preferably stainless steel, and if appropriate of glass-fibre-reinforced plastic.

7. Container according to one of Claims 1 to 6, characterized in that the container (22a) is equipped with a cooling system.

8. Container according to Claim 7, characterized in that the container (22a) has a cooling coil or such like cooling means at or in its wall.

9. Container according to Claim 7 or 8, characterized in that the container inside wall (26) consists of stainless steel, if appropriate of plastic, and the container outside wall (27) consists of plastic, preferably with a thermal insulation (28), and in that a duct (25) for cooling fluid or the like is provided between the inside and outside walls.

10. Container according to one of Claims 7 to 9, characterized in that a refrigerating unit (29) is arranged in the container (22a), for example at the bottom or at the rear.

11. Container according to one of Claims 1 to 10, characterized in that it has a form tapering conically downwards and, for example, has outer dimensions of approximately 83 cm in height, 57 cm in width and 93 cm or 46 cm in depth.

12. Process for preserving meat and extracting it as required, especially by means of a container according to Claims 1 to 11, characterized in that the meat (23) is introduced into a container (22, 22a) essentially closed with the exception of an upper filling orifice and is subjected to pressure from the top in such a way that meat juice thereby flowing out covers the uppermost layer of meat.

13. Process according to Claim 12, characterized in that the meat pieces are stored free of gaps between them.

14. Process according to Claim 12 or 13, characterized in that, when the meat pieces are introduced, gaps remaining between them are eliminated at least substantially by subjecting the meat to pressure.

## Revendications

1. Récipient pour denrées alimentaires pour la conservation et le prélèvement, selon les besoins, de viande (23) stockée sous pression, muni d'un élément de couverture par le haut (24) et d'un support (4) pour l'élément de couverture pouvant être fixé au récipient (22, 22a), ainsi que pour un dispositif d'application de pression (1) sur la viande dont la hauteur à l'intérieur du récipient est réglable, caractérisé en ce que le dispositif d'application de pression, qui a la forme d'un piston-chasse (5) consiste en une tige de guidage (10) guidée le long du support (4) et en un dispositif de presse (12) situé à l'extrémité inférieure et en un ou éventuellement plusieurs contre-appuis (13) pour donner prise à un dispositif de levage (3).

2. Récipient selon la revendication 1, caractérisé en ce que le dispositif de levage (3) comprend un organe de liaison (15) connecté de façon amovible au cadre de support (6), un pied (14) pouvant être fixé sur un contre-appui (13) du piston-chasse (5), ainsi qu'une tige de levage (16) reliée de manière fixe au pied et agissant ou étant guidée à l'endroit de l'organe de liaison (15) pour une modification de la hauteur.

3. Récipient selon la revendication 1 ou 2, caractérisé en ce que le dispositif de levage (3) est constitué par un cric pour autos ou analogue, convenablement adapté.

4. Récipient selon l'une des revendications 1 à 3, caractérisé en ce que le support (4) constitué sensiblement comme un cadre (6) ayant la forme d'un « U » présente à ses extrémités libres des organes de saisie (7) pour saisir par en dessous les bords (2) du récipient, organes constitués essentiellement par des rails en équerre (18), que, le cas échéant, il est prévu des poulies de guidage (21), en particulier sur les branches en « U » (19) du cadre de soutien à une certaine distance par rapport à la face d'appui des organes de saisie du bord (2) du récipient et que les organes de saisie (7) sont, de préférence, sensiblement adaptés à la forme de la section transversale du récipient et éventuellement, de la circonférence du bord.

5. Récipient selon l'une des revendications 1 à 4, caractérisé en ce qu'au moins une branche du « U » (19) ou analogue du support (4) est reliée, par un gond (20) d'axe sensiblement parallèle, respectivement tangentiel au bord du récipient, à la traverse du « U » ou analogue.

6. Récipient selon l'une des revendications 1 à 5, caractérisé en ce qu'au moins ses parties entrant en contact avec la viande (23) consistent en une matière adaptée au contact alimentaire, de préférence acier spécial, et éventuellement principalement une matière synthétique renforcée par fibre de verre.

7. Récipient selon l'une des revendications 1 à 6, caractérisé en ce que le récipient (22a) est muni d'un dispositif de réfrigération.

8. Récipient selon la revendication 7, caractérisé en ce que le récipient (22a) présente, au voisinage ou à l'intérieur de sa paroi, un serpentin ou autre moyen de réfrigération analogue.

9. Récipient selon la revendication 7 ou 8, caractérisé en ce que la paroi intérieure (26) du récipient est, de préférence, constituée en acier spécial et éventuellement en matière synthétique, et que la paroi extérieure (27) du récipient est en matière synthétique, de préférence avec une isolation thermique (28) et qu'un système de conduction (25) pour le liquide réfrigérant ou analogue est prévu entre les parois intérieure et extérieure.

10. Récipient selon l'une des revendications 7 à 9, caractérisé en ce qu'un système de réfrigération (29) est disposé au fond ou à l'arrière du récipient (22a).

11. Récipient selon l'une des revendications 1 à 10, caractérisé en ce qu'il se rétrécit vers le bas et prend ainsi une forme conique, ayant, par exemple, 83 cm de hauteur, 57 cm de largeur et 93 cm, respectivement 46 cm de profondeur.

12. Procédé de conservation et de prélèvement, selon les besoins, de viande, en particulier en utilisant un récipient selon la revendication 1 à 11, caractérisé en ce que la viande (23) est placée dans un récipient (22, 22a) sensiblement fermé, à l'exception de l'ouverture de remplissage sur le haut et qu'une pression par le haut est appliquée, de manière telle que le jus de viande sortant ainsi couvre la couche de viande supérieure.

13. Procédé selon la revendication 12, caractérisé en ce que les morceaux de viande sont placés sans espaces intermédiaires.

14. Procédé selon la revendication 12 ou 13, caractérisé par le fait que les espaces intermédiaires restant après la mise en place de la viande sont supprimés au moins en grande partie après l'application d'une pression sur la viande.

0 114 176

Fig.1

Fig. 2

## Fig.3